# EUROPÄISCHE PATENTANMELDUNG

(11) **EP 1 419 950 A1**
(43) Veröffentlichungstag der Anmeldung: **19.05.2004**
(21) Anmeldenummer: 03450054.6
(22) Anmeldetag: 27.02.2003
(51) Int. Cl.: B61B 12/02, B61B 12/04

(54) **Seilbahnanlage mit verdrehbaren Kabinen oder Sesseln**

(30) Priorität: 14.11.2002 AT 17182002
(71) Anmelder: Innova Patent GmbH, 6960 Wolfurt (AT)
(72) Erfinder: Doppelmayr, Michael, 6922 Wolfurt (AT)
(74) Vertreter: Atzwanger, Richard, Dipl.-Ing. Patentanwalt

(57) **Zusammenfassung**

Seilbahnanlage mit einem in sich geschlossenen, in den Endstationen über Antriebs- bzw. Umlenkräder geführten Trag- und Förderseil sowie mit Fahrbetriebsmitteln, wie Kabinen (2) und Sesseln, welche mittels jeweils einer Gehängestange (1) am Trag- und Förderseil befestigbar sind, wobei am unteren Ende der Gehängestange (1) ein Lager (3) vorgesehen ist, in welchem das Fahrbetriebsmittel (2) um eine zumindest angenähert vertikale Achse verdrehbar gelagert ist. Dabei ist die Anlenkung des Lagers (3) an der Gehängestange (1) mit einer Dämpfungseinrichtung (5,51) ausgebildet.

## Beschreibung

Die gegenständliche Erfindung betrifft eine Seilbahnanlage mit einem in sich geschlossenen, in den Endstationen über Antriebs- bzw. Umlenkräder geführten Trag- und Förderseil sowie mit Fahrbetriebsmitteln, wie Kabinen und Sesseln, welche mittels jeweils einer Gehängestange am Trag- und Förderseil befestigbar sind, wobei am unteren Ende der Gehängestange ein Lager vorgesehen ist, in welchem das Fahrbetriebsmittel um eine zumindest angenähert vertikale Achse verdrehbar gelagert ist.

Aus der AT-U1 2469 ist eine Seilbahnanlage bekannt, bei welcher die Fahrbetriebsmittel, insbesondere die Seilbahnkabinen, gegenüber den Gehängestangen verdrehbar sind. Durch diese Verdrehbarkeit der Fahrbetriebsmittel wird der besondere Effekt erzielt, daß die Benützer der Seilbahnanlage uneingeschränkt die gesamte Landschaft betrachten können.

Der gegenständlichen Erfindung liegt die Aufgabe zugrunde, diese bekannte Seilbahnanlage in mehrfacher Hinsicht zu verbessern, um hierdurch den Anforderungen an den gewünschten Komfort besser zu entsprechen, als dies bei der bekannten Seilbahnanlage der Fall ist. Dies wird erfindungsgemäß dadurch erzielt, daß die Anlenkung des Lagers an der Gehängestange mit einer Dämpfungseinrichtung ausgebildet ist. Durch diese Dämpfungseinrichtung wird gewährleistet, daß bei der Bewegung der Fahrbetriebsmittel über Seilrollen auftretende Stöße weitestgehend gedämpft werden, sodaß diese von den Passagieren nicht wahrgenommen werden.

Vorzugsweise ist am unteren Ende der Tragstange ein angenähert waagrecht ausgerichteter Balken angeordnet, an welchen die Enden von Dämpfungselementen angelenkt sind, deren andere Enden an das Lager angelenkt sind. Durch diese Maßnahme wird in einfacher Weise eine optimal gedämpfte Aufhängung der Fahrbetriebsmittel erzielt.

Vorzugsweise ist der Antriebsmotor am Dach der Seilbahnkabine angeordnet. Weiters sind vorzugsweise die Fahrbetriebsmittel, insbesondere die Seilbahnkabinen, mit einer Batterie und mit Solarelementen zur Speisung der Batterie ausgebildet.

Der Gegenstand der Erfindung ist nachstehend anhand eines in der Zeichnung dargestellten Ausführungsbeispieles näher erläutert. Es zeigen:
- Fig.1: eine Seilbahnkabine in einer erfindungsgemäßen Seilbahnanlage, in Vorderansicht, und
- Fig.2: ein Detail dieser Seilbahnkabine, in gegenüber Fig.1 vergrößertem Maßstab.

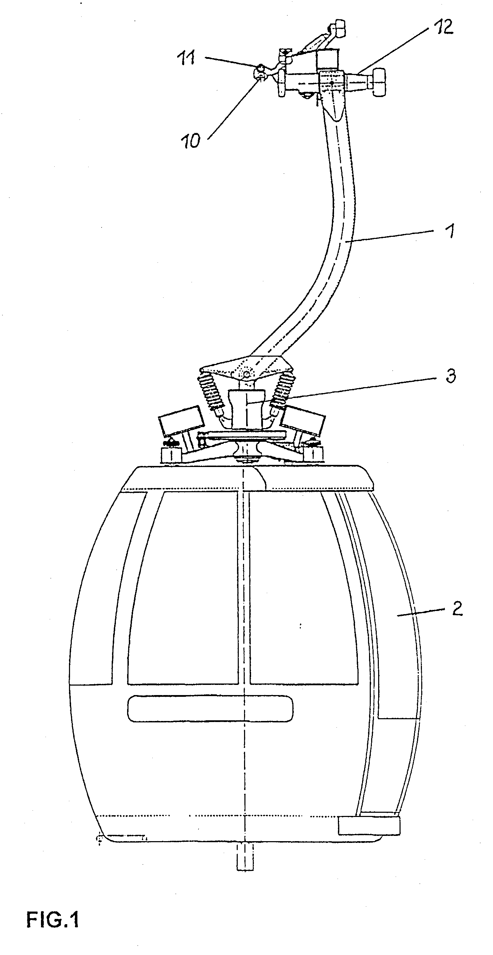

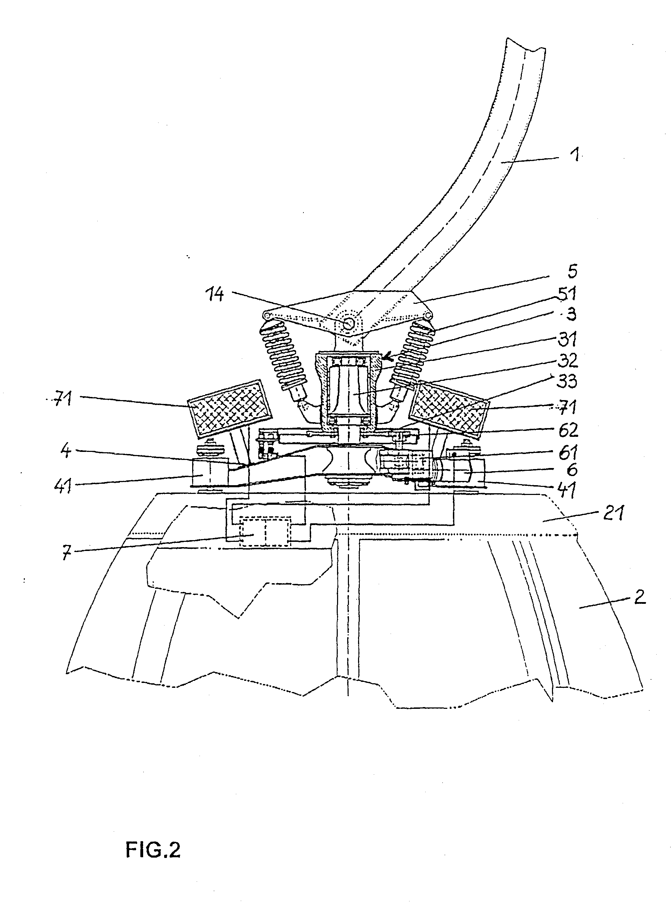

Wie dies aus Fig. 1 ist ersichtlich ist, befindet sich am unteren Ende einer Gehängestange 1 eine Seilbahnkabine 2. Am oberen Ende der Gehängestange 1 sind eine Klemmeinrichtung 11 und ein Laufwerk 12 angeordnet. Mittels der Klemmeinrichtung 12 kann die Seilbahnkabine 2 an das Trag- und Förderseil 10 der Seilbahnanlage angekuppelt werden. In den Stationen kann die Seilbahnkabine 2 vom Trag- und Förderseil 10 abgekuppelt werden, wobei sie mittels des Laufwerkes 12 längs Führungsschienen durch die Einstiegsbereiche bzw. durch die Ausstiegsbereiche hindurch bewegt wird. Zwischen der Gehängestange 1 und der Seilbahnkabine 2 ist weiters eine nachstehend anhand der Fig. 2 näher erläuterte Aufhängung vorgesehen, welche ein Lager 3 aufweist, wodurch die Seilbahnkabine 2 gegenüber der Gehängestange 1 um eine angenähert vertikale Achse verdrehbar ist.

Wie dies aus Fig. 2 ersichtlich ist, ist an das untere Ende der Gehängestange 1 an diese mittels eines Bolzens 14 eine angenähert vertikal ausgerichtete Lagerhülse 31 angelenkt, welche gegenüber der Gehängestange 1 um den angenähert horizontalen Bolzen 14 verschwenkbar ist. In diese Lagerhülse 31 ragt von unten ein Drehzapfen 32 ein, an dessen unterem Ende die Seilbahnkabine 2 befestigt ist. Hierdurch ist die Seilbahnkabine 2 gegenüber der Gehängestange 1 um eine vertikale Achse verdrehbar gelagert. Weiters ist am unteren Ende des Drehzapfens 32 eine Trageinrichtung 4 vorgesehen, an deren freien Enden die Seilbahnkabine 2 mittels Dämpfungselementen 41 befestigt ist.
Zudem ist am unteren Ende der Gehängestange 1 ein angenähert waagrecht ausgerichteter Tragbalken 5 vorgesehen, an welchen die einen Enden von zwei Stoßdämpfern 51 angelenkt sind. Die anderen Enden der Stoßdämpfer 51 sind an die Lagerhülse 31 angelenkt. Durch diese Stoßdämpfer 51 wird die Schwenkbewegung der Seilbahnkabine 2 um den Bolzen 14 gedämpft.

Weiters befindet sich am Dach 21 der Seilbahnkabine 2 ein Elektromotor 6, welcher über ein Doppelschneckengetriebe 61 und ein Antriebsritzel 62 mit einem an der Lagerhülse 31 starr befestigten Zahnkranz 33 zusammenwirkt. Da die Lagerhülse 31 nicht verdrehbar ist, erfolgt durch den Antrieb des Elektromotors 6 eine Verdrehung der Seilbahnkabine 2 um die angenähert vertikal ausgerichtete Drehachse des Lagers 3.

Weiters sind in der Seilbahnkabine 2 eine Steuereinheit 7 für den Elektromotor 6, eine Batterie und Solarzellen 71, durch welche die Batterie gespeist wird, vorgesehen.

Durch eine derartige Seilbahnkabine wird den Anforderungen hinsichtlich des angestrebten Komforts entsprochen.
In analoger Weise kann auch der Sessel einer Seilbahnanlage an der Gehängestange gegenüber dieser verdrehbar befestigt sein.

## Patentansprüche

1. Seilbahnanlage mit einem in sich geschlossenen, in den Endstationen über Antriebs- bzw. Umlenkräder geführten Trag- und Förderseil (10) sowie mit Fahrbetriebsmitteln, wie Kabinen (2) und Sesseln, welche mittels jeweils einer Gehängestange (1) am Trag- und Förderseil (10) befestigbar sind, wobei am unteren Ende der Gehängestange (1) ein Lager (3) vorgesehen ist, in welchem das Fahrbetriebsmittel (2) um eine zumindest angenähert vertikale Achse verdrehbar gelagert ist, **dadurch gekennzeichnet, daß** die Anlenkung des Lagers (3) an der Tragstange (1) mit einer Dämpfungseinrichtung (5, 51) ausgebildet ist.

2. Seilbahnanlage nach Patentanspruch 1, **dadurch gekennzeichnet, daß** am unteren Ende der Tragstange (1) ein angenähert waagrecht ausgerichteter Balken (5) angeordnet ist, an welchem die Enden von Dämpfungselementen (51) angelenkt sind, deren andere Enden an das Lager (3) angelenkt sind.

3. Seilbahnanlage nach einem der Patentansprüche 1 und 2, **dadurch gekennzeichnet, daß** der Antriebsmotor (6) am Dach (21) der Seilbahnkabine (2) angeordnet ist.

4. Seilbahnanlage nach einem der Patentansprüche 1 bis 3, **dadurch gekennzeichnet, daß** das Fahrbetriebsmittel, insbesondere die Seilbahnkabine (2), mit Solarelementen ausgebildet ist.
